(19) Europäisches Patentamt
European Patent Office
Office européen des brevets

(11) **EP 1 589 686 B1**

(12) **FASCICULE DE BREVET EUROPEEN**

(45) Date de publication et mention de la délivrance du brevet:
**29.08.2007 Bulletin 2007/35**

(51) Int Cl.:
*H04L 1/06* *(2006.01)*    *H04B 7/06* *(2006.01)*

(21) Numéro de dépôt: **04291041.4**

(22) Date de dépôt: **22.04.2004**

(54) **Emission pour systèmes de communications CDMA sur canal mimo**

Übertragung zum CDMA Kommunikationssystem durch ein MIMO Kanal

Transmission for CDMA communications system on MIMO channel

(84) Etats contractants désignés:
**AT BE BG CH CY CZ DE DK EE ES FI FR GB GR HU IE IT LI LU MC NL PL PT RO SE SI SK TR**

(43) Date de publication de la demande:
**26.10.2005 Bulletin 2005/43**

(73) Titulaire: **FRANCE TELECOM**
**75015 Paris (FR)**

(72) Inventeurs:
• **Visoz, Raphael**
**92130 Issy les Moulineaux (FR)**
• **Berthet, Antoine**
**92290 Chatenay Malabry (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**WO-A-02/35762**    **WO-A-03/001726**
**US-A1- 2002 168 017**

• **SAMPATH H ET AL: "Joint transmit and receive optimization for high data rate wireless communication using multiple antennas" SIGNALS, SYSTEMS, AND COMPUTERS, 1999. CONFERENCE RECORD OF THE THIRTY-THIRD ASILOMAR CONFERENCE ON OCT. 24-27, 1999, PISCATAWAY, NJ, USA,IEEE, US, 24 octobre 1999 (1999-10-24), pages 215-219, XP010373976 ISBN: 0-7803-5700-0**

**Description**

## DOMAINE TECHNIQUE GENERAL

La présente invention est relative au domaine des communications numériques. Elle concerne la manière d'acheminer des données numériques sur un canal MIMO sélectif en fréquence en vue de maximiser l'efficacité spectrale.

## PRESENTATION GENERALE DE L'ART ANTERIEUR

### En émission

Avec l'avènement des technologies antennaires, les modèles de communications reposant sur les différentes méthodes d'accès multiple TDMA (accès multiple par répartition en temps), CDMA (accès multiple par répartition en codes), ODFMA (accès multiple par répartition fréquences orthogonales), sont systématiquement revisités et étendus au cas des canaux MIMO. Dans le but d'améliorer l'efficacité spectrale, les systèmes doivent de plus être étudiés en régime surchargé, c'est-à-dire lorsque le nombre d'utilisateurs est choisi supérieur à la ressource à disposition (en slots temporels ou fréquentiels disjoints, et/ou en codes d'étalement orthogonaux) tout en préservant la possibilité de les séparer en détection (voir par exemple [1]).

**[1] H. Sari, F. Vanhaverbeke, M. Moeneclaey, "Channel Overloading in Multiuser and Single User Communications," ref.**

De récents travaux théoriques ont exploré le potentiel des antennes multiples en émission (T antennes) et en réception (R antennes) et mettent en lumière une augmentation potentielle considérable de la capacité. Parmi les schémas de codage espace-temps adaptés à ces transmissions dites MIMO, seule l'approche BLAST [2] (ci-après présenté), pour laquelle la capacité augmente linéairement avec min($T,R$) (cas ergodique), permet de supporter des débits remarquablement élevés.

**[2] G.J. Foschini, "Lavered Space-Time Architecture for Wireless Communication in a Fading Environment When Using Multiple Antennas," Bell Labs Tech. J., vol. 2, no. 2, pp. 41-59, 1996.**

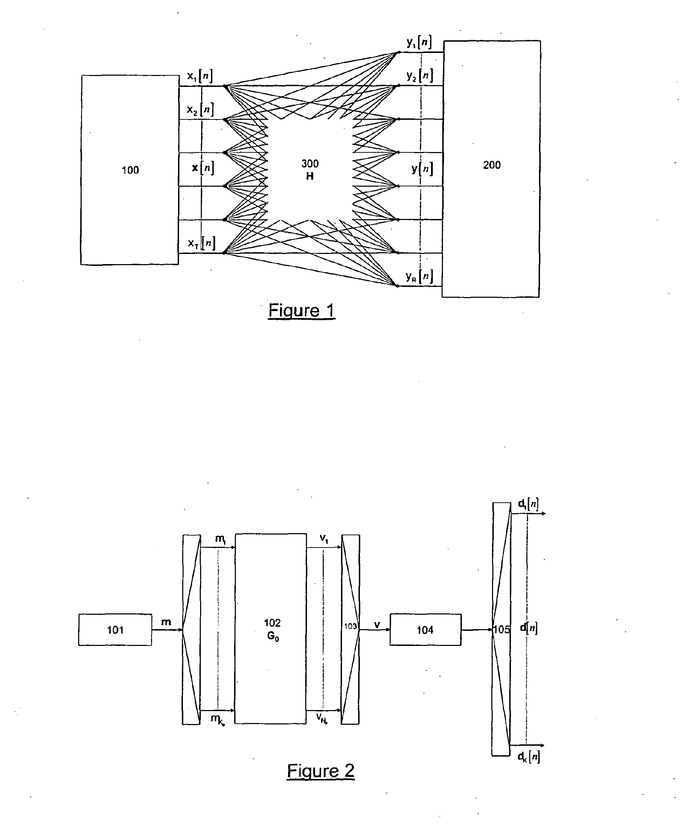

En référence à la figure 1, le concept BLAST en émission 100 se résumant à un simple démultiplexage spatial des données sur les différentes couches émettrices (V-BLAST), autorise n'importe quel type de schéma de modulation, (monoporteuse, multiporteuse avec ou sans étalement de spectre), et peut être combiné avec un codage du canal 300 externe suivi d'un entrelacement binaire (modulation codée entrelacée STBICM).
Ainsi, un modèle d'émission de type STBICM employant des codes d'embrouillage propres sur chaque couche est divulgué par exemple dans le document [3] (ci-après présenté). Une analogie formelle peut être faite avec le MC-CDMA lorsque l'étalement est réalisé dans le domaine fréquentiel.
La réception est quant à elle référencée 200 sur la figure 1.

**[3] D.L. Shilling, "Efficient Shadow Reduction Antenna System for Spread Spectrum," US 6 128 330, Oct. 2000.**

## PRÉSENTATION DE L'INVENTION

L'invention propose, selon un premier aspect, un procédé d'émission selon l'une des revendications 1 à 21.
L'invention propose, selon un deuxième aspect, un système d'émission selon l'une des revendications 22 à 25.
C'est un objet de la présente invention que de proposer un schéma de codage espace-temps basé sur une combinaison de techniques et mécanismes simples, en vue d'augmenter l'efficacité spectrale et de lutter contre les effets néfastes du canal de transmission MIMO sélectif en fréquence à T antennes d'émission et R antennes de réception, sous l'hypothèse générale d'une absence de CSI (i.e. information sur l'état du canal) à l'émission.
Des objectifs principaux de la présente invention sont en outre :

- un schéma de codage espace-temps en émission comprenant un procédé de codage correcteur de canal et d'entrelacement externe ;
- un schéma de codage espace-temps en émission basé sur un démultiplexage des données codées en vue de produire K > T flux distincts de données symboliques codées entrelacées ;
- un schéma de codage espace-temps en émission basé sur un codage interne linéaire (ou étalement) spatio-temporel ou spatio-fréquentiel réalisé au moyen d'une ressource limitée en codes orthogonaux de longueur N ou N/T, ces codes étant réutilisés de telle sorte qu'un fonctionnement du système au-delà de la saturation puisse être envisagé dans le but d'augmenter l'efficacité spectrale ;

- un multiplexage des données codées, modulées, étalées dans l'espace et dans le temps sur T antennes d'émission distinctes ;
- un schéma de codage espace-temps en émission dont l'efficacité spectrale peut être adaptée avec une grande finesse aux conditions de propagation ;

En particulier, l'invention propose à l'émission un dispositif comprenant :

- des moyens pour garantir une décorrélation temporelle des échantillons de bruit affectant les chips lorsqu'on reforme en réception le modèle d'accès multiple à K utilisateurs en l'absence supposée de MAI+ISI, lesdits moyens consistant en un codage interne linéaire périodique suivi d'un entrelacement chip ou en un codage interne linéaire apériodique, avant transmission sur le canal MIMO. Notons que si un entrelacement chip n'est pas nécessaire pour un codage interne linéaire apériodique, celui-ci reste optionnel.

## DESCRIPTION DES FIGURES

D'autres caractéristiques et avantages de l'invention ressortiront encore de la description qui suit, laquelle est purement illustrative et non limitative et doit être lue en regard des dessins annexés sur lesquels :

- La figure 1 illustre le concept de la technique de VBLAST appliquée sur un canal MIMO sélectif en fréquence ;
- La figure 2 illustre un procédé générique de codage de canal externe de l'information numérique, d'entrelacement, et de démultiplexage en K flux ;
- La figure 3 illustre un procédé de codage interne linéaire (ou d'étalement) spatio-temporel (ou spatio-fréquentiel) suivi d'un multiplexage sur T antennes d'émission ;
- La figure 4 illustre un procédé de codage interne linéaire (ou d'étalement) spatio-temporel (ou spatio-fréquentiel) suivi d'un multiplexage sur une voie unique, d'un entrelacement au niveau chip, puis d'un démultiplexage sur les T antennes d'émission ;
- La figure 5 illustre un procédé générique de codage de canal externe de l'information numérique, d'entrelacement, d'un premier démultiplexage en T flux (démultiplexage spatial) suivi d'un second démultiplexage en U flux (démultiplexage en codes) ;
- La figure 6 illustre un procédé de codage interne linéaire (ou d'étalement) temporel (ou fréquentiel) et de multiplexage indépendant par antenne, compatible avec le mode HSDPA de l'UMTS ;
- La figure 7 illustre un procédé de codage interne linéaire (ou d'étalement) temporel (ou fréquentiel) et de multiplexage indépendant par antenne suivi d'un multiplexage en flux unique, d'un entrelacement au niveau chip, puis d'un démultiplexage sur les T antennes d'émission, compatible avec le mode HSDPA de l'UMTS ;
- La figure 8 illustre le canal équivalent plat ergodique ou à évanouissement par blocs obtenue par la décomposition du MIMO sélectif en fréquence dans la base de Fourier et qui sert couramment de modèle pour les modulations multiporteuses.

## DESCRIPTION DE FORMIES PRIVILIGIEES DE LA PRESENTE INVENTION

### 1. Structure générale de l'émetteur

La présente invention décrit un schéma de modulation/codage à grande efficacité spectrale, et haute capacité d'adaptabilité, reposant sur l'emploi de modulations par étalement de spectre et sur l'utilisation d'antennes multiples en émission et en réception. La solution proposée est pertinente sous l'hypothèse d'une absence de connaissance du canal à l'émission (pas de CSI) et d'une connaissance parfaite du canal en réception (CSI).

### 1.1. Codage externe des données

Les données numériques utiles sont collectées et groupées en un message $\mathbf{m}$ de $K_o$ bits constituant la source 101 des données numériques en émission. A tout message $\mathbf{m}$, un code externe $C_o$ linéaire, de matrice génératrice $\mathbf{G}_o$ de dimension $N_o \times K_o$ et construit sur $F_2$ assigne en 102 un mot de code v de longueur $N_o$ bits, défini par la relation matricielle :

$$\mathbf{v} = \mathbf{G}_o \, \mathbf{m}$$

Le rendement de codage externe est :

$$\rho = \frac{K_o}{N_o}$$

La longueur $N_o$ des mots de code est liée aux différents paramètres du système par la relation :

$$N_o = K \times L \times q$$

où K désigne le nombre total d'utilisateurs, L la longueur des paquets (en temps symbole) et q le nombre de bits par symbole de modulation. Le code peut être de tout type, par exemple un code convolutif, un turbo-codes, un code LDPC... Dans une configuration de type accès multiple, le message **m** consiste en une pluralité de messages issus de sources différentes et multiplexés. Le codage s'effectue indépendamment sur chaque message composant. Le mot de code v résulte de la concaténation des différents mots de code produits.

## 1.2. Entrelacement binaire

Après multiplexage 103, le mot de code v est envoyé dans un entrelaceur 104 (opérant au niveau binaire et, le cas échéant, doté d'une structure particulière). Dans une configuration de type accès multiple, l'entrelacement agit par morceaux sur les différents mots de code placés les uns à la suite des autres. La sortie de cet entrelaceur 104 est morcelée en $KL$ q-uplets de bits, appelés entiers.

## 1.3. Démultiplexage et modulation

Le flux d'entiers est soumis à un procédé de démultiplexage 105 sur K voies distinctes, K étant strictement supérieur à T, et choisi arbitrairement. La sortie de cette opération est une matrice d'entiers **D** de dimension $K \times L$. Les L colonnes **d**[$n$] $n = 0, ..., L$ -1 de cette matrice **D** possèdent la structure suivante :

$$\mathbf{d}[n] = \begin{bmatrix} \mathbf{d}_1[n]^\mathsf{T} & \mathbf{d}_2[n]^\mathsf{T} & \cdots & \mathbf{d}_K[n]^\mathsf{T} \end{bmatrix}^\mathsf{T} \in F_2^{qK}$$

où les entiers composants $d_k$ [n] k = 1,..., K sont eux-mêmes structurés comme suit :

$$\mathbf{d}_k[n] = \begin{bmatrix} d_{k,1}[n] & d_{k,2}[n] & \cdots & d_{k,q}[n] \end{bmatrix}^\mathsf{T} \in F_2^q$$

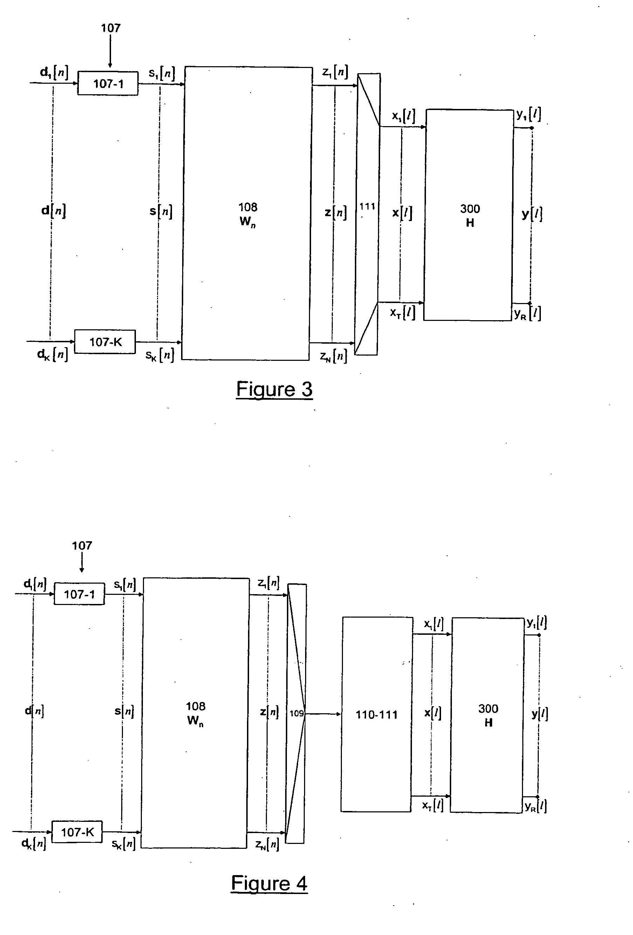

En référence à la figure 3, les entiers $d_k$ [$n$] de la matrice **D** sont ensuite individuellement modulés (107) en données modulées, et plus particulièrement ici en symboles complexes $s_k$ [$n$] d'une constellation $\mathfrak{I} \subset \mathbb{C}$ à $Q = 2^q$ éléments au travers d'une table de modulation $\mu : F_2^q \mapsto \mathfrak{I}$. Cette opération transforme la matrice d'entiers **D** en une matrice complexe **S** de dimension $K \times L$ dont les L colonnes **s**[$n$] $n = 0, ..., L$ -1 sont structurées de la manière suivante :

$$\mathbf{s}[n] \triangleq \mu(\mathbf{d}[n]) = \begin{bmatrix} s_1[n] & s_2[n] & \cdots & s_K[n] \end{bmatrix}^\mathsf{T} \in \mathfrak{I}^K$$

Il est utile de préciser les relations inverses suivantes :

$$\mu^{-1}\left(\mathbf{s}[n]\right) \triangleq \mathbf{d}[n] \quad \mu^{-1}\left(s_k[n]\right) \triangleq \mathbf{d}_k[n] \quad \mu_j^{-1}\left(s_k[n]\right) \triangleq d_{k,j}[n]$$

### 1.4. Stratégies de codage interne linéaire (ou d'étalement)

Plusieurs options sont possibles en ce qui concerne la définition de la matrice génératrice **W**, définissant un codage interne linéaire sur le corps des complexes (ou étalement), qui peuvent influer sur la structure de l'émetteur et sur les caractéristiques des front-ends linéaires en réception :

- Etalement (ou codage interne) périodique où **W** est réutilisée à chaque temps symbole. Pour garantir la décorrélation temporelle des échantillons de bruit affectant les chips lorsque l'on reforme le système à accès multiple après égalisation, un entrelacement chip doit être appliqué avant transmission sur le canal MIMO ; ou
- Etalement (ou codage interne) apériodique où **W** dépend explicitement du temps symbole. L'étalement apériodique garantit la décorrélation temporelle des échantillons de bruit affectant les chips lorsque l'on reforme le système à accès multiple après égalisation. L'entrelacement chip n'est plus nécessaire mais reste optionnel.

Par ailleurs, l'étalement peut être spatio-temporel (ou spatio-fréquentiel) lorsqu'il est fait d'un bloc sur l'ensemble des antennes, ou uniquement temporel (ou fréquentiel) lorsqu'il est réalisé indépendamment par antenne. Quatre principaux types de codages internes linéaires seront donc présentés ci-après :

- un codage interne linéaire (ou étalement) spatio-temporel (ou spatio-fréquentiel) apériodique ;
- un codage interne linéaire (ou étalement) temporel (ou fréquentiel) apériodique ;
- un codage interne linéaire (ou étalement) spatio-temporel (ou spatio-fréquentiel) périodique ;
- un codage interne linéaire (ou étalement) temporel (ou fréquentiel) périodique.

### 1.5. Etalement (ou codage interne linéaire) spatio-temporel (ou spatio-fréquentiel) apériodique, sans entrelacement chip

En référence à la figure 3, on suppose ici un étalement spatio-temporel (spatio-fréquentiel) apériodique. L'étalement spatio-temporel (spatio-fréquentiel) est réalisé pour chaque matrice **S** au moyen d'une matrice de codage interne **W**$_n$ de dimension $N \times K$ avec :

$$N = T \times S_F \quad S_F \in \mathbb{Z}$$

On appelle rapport de codage interne (ou load) du système le rapport :

$$\alpha = \frac{K}{N}$$

La multiplication du vecteur de symboles $s[n]$ par la matrice de codage interne **W** donne lieu à un vecteur :

$$\mathbf{z}[n] \triangleq \mathbf{W}_n \mathbf{s}[n] = \left[ z_1[n] \quad z_2[n] \quad \cdots \quad z_N[n] \right]^{\mathsf{T}} \in \mathbb{C}^N$$

La relation peut également être écrite au niveau matriciel :

$$\mathbf{Z} \triangleq \mathbf{W}_n \mathbf{S} \in \mathbb{C}^{N \times L}$$

Les vecteurs de chips $z_n[n]$ $n = 0,...,L$-1 sont multiplexés en T flux de chips distincts (un par antenne d'émission). Cette opération a pour effet de transformer la matrice de chips **Z** de dimension $N \times L$ :

$$\mathbf{Z} = \begin{bmatrix} \mathbf{z}[0] & \mathbf{z}[1] & \cdots & \mathbf{z}[L-1] \end{bmatrix} \in \mathbb{C}^{N \times L}$$

en une matrice de chips **X** de dimension $T \times LS_F$ :

$$\mathbf{X} = \begin{bmatrix} \mathbf{x}[0] & \mathbf{x}[1] & \cdots & \mathbf{x}[LS_F - 1] \end{bmatrix} \in \mathbb{C}^{T \times LS_F}$$

dont les colonnes $\mathbf{x}[l]$ $l = 0, \cdots, LS_F$ -1 constituent les entrées du canal MIMO :

$$\mathbf{x}[l] = \begin{bmatrix} x_1[l] & x_2[l] & \cdots & x_T[l] \end{bmatrix}^{\mathsf{T}} \in \mathbb{C}^{T}$$

Pour construire la matrice de codage interne $\mathbf{W}_n$, on dispose de N codes orthogonaux de longueur N. Le système est surchargé dès que :

$$K > N$$

Considérons le résultat de la division polynomiale de K par N :

$$K = AN + B$$

Les K utilisateurs sont donc répartis en A groupes saturés de N utilisateurs, et 1 groupe non saturé de B utilisateurs. On pose :

$$\Omega_{N,N} = \begin{bmatrix} \omega_{1,1} & \omega_{1,2} & \cdots & \omega_{1,N} \\ \omega_{1,1} & \omega_{2,2} & \cdots & \omega_{2,N} \\ \vdots & \vdots & \ddots & \vdots \\ \omega_{N,1} & \omega_{N,2} & \cdots & \omega_{N,N} \end{bmatrix} \in \mathbb{C}^{N \times N}$$

$\times$une matrice $N \times N$ représentant un groupe de codes d'étalement, unitaire, formée des N codes orthogonaux (matrice de Hadamard par exemple) qui par construction satisfait l'égalité :

$$\Omega_{N,N}^{\dagger} \Omega_{N,N} = \mathbf{I}$$

et

$$\Omega_{N,B} = \begin{bmatrix} \omega_{1,k_1} & \omega_{1,k_2} & \cdots & \omega_{1,k_B} \\ \omega_{2,k_1} & \omega_{2,k_2} & \cdots & \omega_{2,k_B} \\ \vdots & \vdots & \ddots & \vdots \\ \omega_{N,k_1} & \omega_{N,k_2} & \cdots & \omega_{N,k_B} \end{bmatrix} \in \mathbb{C}^{N \times B}$$

une version tronquée, formée de B colonnes tirées aléatoirement dans $\Omega_{N,N}$. Pareillement :

$$\Omega_{N,B}^{\dagger} \Omega_{N,B} = \mathbf{I}$$

On appelle matrice d'embrouillage pour le groupe saturé d'utilisateurs $i$ = 1,..., $A$ et on note :

$$\Sigma_{N,N}^{(n,i)} = \begin{bmatrix} \varsigma_1^{(n,i)} & & & \\ & \varsigma_2^{(n,i)} & & \\ & & \ddots & \\ & & & \varsigma_N^{(n,i)} \end{bmatrix} \in \mathbb{C}^{N \times N}$$

la matrice $N \times N$, diagonale, dont les éléments diagonaux sont des chips QPSK normalisés pseudo-aléatoirement tirés. De même, on appelle :

$$\Sigma_{N,N}^{(n,B)} = \begin{bmatrix} \varsigma_1^{(n,B)} & & & \\ & \varsigma_2^{(n,B)} & & \\ & & \ddots & \\ & & & \varsigma_N^{(n,B)} \end{bmatrix} \in \mathbb{C}^{N \times N}$$

la matrice d'embrouillage $N \times N$ pour le groupe non saturé de B utilisateurs.
Cette matrice d'embrouillage va ainsi permettre de garantir une décorrélation des flux de chips émis sur les différentes antennes (au moyen des codes d'embrouillage), lorsqu'on l'applique à la matrice d'étalement pour former la matrice de codage interne $\mathbf{W}_n$ comme suit :

$$\mathbf{W}_n = \begin{bmatrix} \Sigma_{N,N}^{(n,1)} & \cdots & \Sigma_{N,N}^{(n,A)} & \Sigma_{N,N}^{(n,B)} \end{bmatrix} \begin{bmatrix} \Omega_{N,N} & & & \\ & \ddots & & \\ & & \Omega_{N,N} & \\ & & & \Omega_{N,B} \end{bmatrix} \in \mathbb{C}^{N \times K}$$

Elle peut toujours être écrite sous la forme :

$$\mathbf{W}_n = \begin{bmatrix} w_{1,1}^{(n)} & w_{1,2}^{(n)} & \cdots & w_{1,K}^{(n)} \\ w_{2,1}^{(n)} & w_{2,2}^{(n)} & \cdots & w_{2,K}^{(n)} \\ \vdots & \vdots & \ddots & \vdots \\ w_{N,1}^{(n)} & w_{N,2}^{(n)} & \cdots & w_{N,K}^{(n)} \end{bmatrix} \in \mathbb{C}^{N \times K}$$

**1.6. Etalement temporel (ou fréquentiel) apériodique indépendant par antenne d'émission (principe du « code re-use »), sans entrelacement chip**

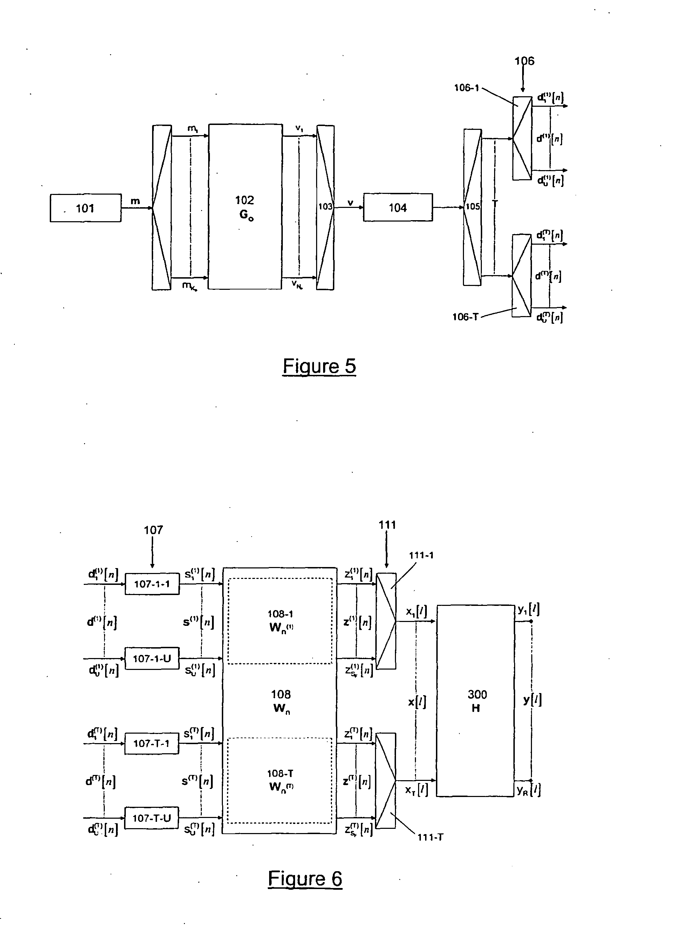

Dans cette autre variante selon l'invention, en référence à la figure 6, compatible avec le mode HSDPA de la norme UMTS, on dispose de $S_F$ codes orthogonaux de longueur $S_F$.

Le paramètre N est toujours un multiple de T :

$$N = T \times S_F \quad S_F \in \mathbb{Z}$$

Les $S_F$ codes à disposition sont réutilisés sur chaque antenne d'émission (principe dit du « code re-use »). L'étalement, réalisé indépendamment par antenne, est temporel ou fréquentiel. Ceci impose que K soit également un multiple de T :

$$K = T \times U \quad U \in \mathbb{Z}$$

Cette condition non limitative selon l'invention entraîne alors une nouvelle expression du rendement de codage interne (encore appelé load) :

$$\alpha = \frac{U}{S_F}$$

La matrice de codage interne $\mathbf{W}_n$ possède une structure diagonale par blocs :

$$\mathbf{W}_n = \begin{bmatrix} \mathbf{W}_n^{(1)} & & & 0 \\ & \mathbf{W}_n^{(2)} & & \\ & & \ddots & \\ 0 & & & \mathbf{W}_n^{(T)} \end{bmatrix} \in \mathbb{C}^{N \times K}$$

le bloc $\mathbf{W}_n^{(t)}$ de la matrice de codage interne étant associé à l'antenne t de dimension $S_F \times U$.

En référence à la figure 6, le vecteur d'entier $\mathbf{d}[n]$ (démultiplexé en 105, après avoir été codé en 102 et entrelacé en 104) émis à l'instant n possède la structure particulière suivante :

$$\mathbf{d}[n] = \begin{bmatrix} \mathbf{d}^{(1)}[n]^{\mathsf{T}} & \mathbf{d}^{(2)}[n]^{\mathsf{T}} & \cdots & \mathbf{d}^{(T)}[n]^{\mathsf{T}} \end{bmatrix}^{\mathsf{T}} \in F_2^{qK}$$

où les vecteurs de symboles $\mathbf{d}^{(t)}[n]$ $t = 1, ..., T$ sont eux-mêmes définis comme :

$$\mathbf{d}^{(t)}\left[n\right]=\left[\begin{array}{cccc}\mathbf{d}_1^{(t)}\left[n\right]^{\mathsf{T}} & \mathbf{d}_2^{(t)}\left[n\right]^{\mathsf{T}} & \cdots & \mathbf{d}_U^{(t)}\left[n\right]^{\mathsf{T}}\end{array}\right]^{\mathsf{T}}\in F_2^{qU}$$

En référence à la figure 6, la modulation 107 de ces données multiplexées **d**[n] donne un vecteur de symboles émis à l'instant n ayant la structure particulière suivante :

$$\mathbf{s}\left[n\right]=\left[\begin{array}{cccc}\mathbf{s}^{(1)}\left[n\right]^{\mathsf{T}} & \mathbf{s}^{(2)}\left[n\right]^{\mathsf{T}} & \cdots & \mathbf{s}^{(T)}\left[n\right]^{\mathsf{T}}\end{array}\right]^{\mathsf{T}}\in\mathbb{C}^K$$

où les vecteurs de symboles $\mathbf{s}^{(t)}$ [n] $t$ = 1,...,$T$ sont eux-mêmes définis comme :

$$\mathbf{s}^{(t)}\left[n\right]=\left[\begin{array}{cccc}s_1^{(t)}\left[n\right] & s_2^{(t)}\left[n\right] & \cdots & s_U^{(t)}\left[n\right]\end{array}\right]^{\mathsf{T}}\in\mathbb{C}^U$$

La multiplication 108 du vecteur de symboles s [n] par la matrice de codage interne $\mathbf{W}_n$ donne lieu au vecteur :

$$\mathbf{z}\left[n\right]\triangleq\mathbf{W}_n\mathbf{s}\left[n\right]$$

qui possède également une structure particulière :

$$\mathbf{z}\left[n\right]=\left[\begin{array}{cccc}\mathbf{z}^{(1)}\left[n\right]^{\mathsf{T}} & \mathbf{z}^{(2)}\left[n\right]^{\mathsf{T}} & \cdots & \mathbf{z}^{(T)}\left[n\right]^{\mathsf{T}}\end{array}\right]^{\mathsf{T}}\in\mathbb{C}^N$$

où les vecteurs de chips $\mathbf{z}^{(t)}$ [n] t = 1,...,$T$ sont eux-mêmes définis comme :

$$\mathbf{z}^{(t)}\left[n\right]\triangleq\mathbf{W}_n^{(t)}\mathbf{s}^{(t)}\left[n\right]=\left[\begin{array}{cccc}z_1^{(t)}\left[n\right] & z_2^{(t)}\left[n\right] & \cdots & z_{S_F}^{(t)}\left[n\right]\end{array}\right]^{\mathsf{T}}\in\mathbb{C}^{S_F}$$

Pour chaque antenne t, le vecteur de chips $\mathbf{z}^{(t)}[n]$ est ensuite multiplexé en 109-t sur l'antenne d'émission t qui lui est associée.
On remarquera que, dans cette variante d'émission, la récupération de la diversité spatiale s'effectue au travers du code $G_0$ (en 102) et de l'entrelacement binaire (en 104) externes. La capacité de surcharge, connue pour augmenter avec la longueur des codes d'étalement, est moindre.
Les conditions de surcharge et la construction explicite de la matrice $\mathbf{W}_n$ peuvent être précisées. Le système est surchargé dès que :

$$T\times U>S_F$$

Ceci n'implique pas nécessairement U > $S_F$ (c'est-à-dire qu'il n'y a pas nécessairement une surcharge par antenne).
Lorsque U > $S_F$, les différentes antennes sont individuellement surchargées. L'inégalité $T\times U>S_F$ est alors trivialement vérifiée et le système à antennes multiples est qualifié d'entièrement surchargé.
On considère le résultat de la division polynomiale de U par $S_F$ :

$$U=AS_F+B$$

Les U utilisateurs associés à chacune des antennes d'émission sont donc répartis en A groupes saturés de

$S_F$ utilisateurs, et 1 groupe non saturé de B utilisateurs.
On :pose :

$$\Omega_{S_F,S_F} = \begin{bmatrix} \omega_{1,1} & \omega_{1,2} & \cdots & \omega_{1,S_F} \\ \omega_{2,1} & \omega_{2,2} & \cdots & \omega_{2,S_F} \\ \vdots & \vdots & \ddots & \vdots \\ \omega_{S_F,1} & \omega_{S_F,2} & \cdots & \omega_{S_F,S_F} \end{bmatrix} \in \mathbb{C}^{S_F \times S_F}$$

une matrice $S_F \times S_F$ représentant un groupe de codes d'étalement, unitaire, formée des $S_F$ codes orthogonaux (matrice de Hadamard par exemple) qui par construction satisfait l'égalité :

$$\Omega_{S_F,S_F}^{\dagger} \Omega_{S_F,S_F} = \mathbf{I}$$

et

$$\Omega_{S_F,B}^{(t)} = \begin{bmatrix} \omega_{1,k_1}^{(t)} & \omega_{1,k_2}^{(t)} & \cdots & \omega_{1,k_B}^{(t)} \\ \omega_{2,k_1}^{(t)} & \omega_{2,k_2}^{(t)} & \cdots & \omega_{2,k_B}^{(t)} \\ \vdots & \vdots & \ddots & \vdots \\ \omega_{S_F,k_1}^{(t)} & \omega_{S_F,k_2}^{(t)} & \cdots & \omega_{S_F,k_B}^{(t)} \end{bmatrix} \in \mathbb{C}^{S_F \times B}$$

une version tronquée, propre à l'antenne t, formée de B colonnes tirées aléatoirement dans $\Omega_{S_F,S_F}$. Pareillement :

$$\Omega_{S_F,B}^{(t)\dagger} \Omega_{S_F,B}^{(t)} = \mathbf{I}$$

On appelle matrice d'embrouillage pour le groupe saturé d'utilisateurs $i = 1,..., A$ et on note :

$$\Sigma_{S_F,S_F}^{(n,t,i)} = \begin{bmatrix} \varsigma_1^{(n,t,i)} & & & \\ & \varsigma_2^{(n,t,i)} & & \\ & & \ddots & \\ & & & \varsigma_{S_F}^{(n,t,i)} \end{bmatrix} \in \mathbb{C}^{S_F \times S_F}$$

une matrice $S_F \times S_F$, diagonale, dont les éléments diagonaux sont des chips QPSK normalisés aléatoirement tirés. De même, on appelle :

$$\Sigma_{S_F,S_F}^{(n,t,B)} = \begin{bmatrix} \varsigma_1^{(n,t,B)} & & & \\ & \varsigma_2^{(n,t,B)} & & \\ & & \ddots & \\ & & & \varsigma_{S_F}^{(n,t,B)} \end{bmatrix} \in \mathbb{C}^{S_F \times S_F}$$

la matrice d'embrouillage $S_F \times S_F$ pour le groupe non saturé associé à l'antenne t.

Cette matrice d'embrouillage associée au bloc $\mathbf{W}_n^{(t)}$ (de l'antenne $t = 1,...,T$) va ainsi permettre de garantir une décorrélation des flux de chips émis sur l'antenne t (au moyen des codes d'embrouillage), lorsqu'on l'applique à la matrice d'étalement pour former le bloc $\mathbf{W}_n^{(t)}$ de la matrice de codage interne $\mathbf{W}_n$ comme suit :

$$\mathbf{W}_n^{(t)} = \begin{bmatrix} \Sigma_{S_F,S_F}^{(n,t,1)} & \cdots & \Sigma_{S_F,S_F}^{(n,t,A)} & \Sigma_{S_F,S_F}^{(n,t,B)} \end{bmatrix} \begin{bmatrix} \Omega_{S_F,S_F} & & & \\ & \ddots & & \\ & & \Omega_{S_F,S_F} & \\ & & & \Omega_{S_F,B}^{(t)} \end{bmatrix} \in \mathbb{C}^{S_F \times U}$$

que l'on peut toujours écrire :

$$\mathbf{W}_n^{(t)} = \begin{bmatrix} w_{1,1}^{(n,t)} & w_{1,2}^{(n,t)} & \cdots & w_{1,U}^{(n,t)} \\ w_{2,1}^{(n,t)} & w_{2,2}^{(n,t)} & \cdots & w_{2,U}^{(n,t)} \\ \vdots & \vdots & \ddots & \vdots \\ w_{S_F,1}^{(n,t)} & w_{S_F,2}^{(n,t)} & \cdots & w_{S_F,U}^{(n,t)} \end{bmatrix} \in \mathbb{C}^{S_F \times U}$$

<u>Remarque</u> : Pour des raisons de simplicité évidentes, a été traité dans ce chapitre un cas où la matrice $\mathbf{W}_n$ de codage interne est constituée de blocs $\mathbf{W}_n^{(t)}$ ($t \in [1 ; T]$) de dimensions identiques entre eux ($S_F \times U$).

Ce cas peut être étendu à des cas plus généraux où la matrice $\mathbf{W}_n$ de codage interne est constituée de blocs de dimensions différentes les uns par rapport aux autres, et notamment le cas plus général où le bloc $\mathbf{W}_n^{(t)}$ est de dimension $S_F \times U_t$, $U_t$ étant alors le nombre de voies potentielles de l'antenne t, qui n'est ainsi pas nécessairement le même d'une antenne à l'autre.

La matrice $\mathbf{W}_n$ est donc de dimension NxK avec : $K = \sum_{t=1}^{T} U_t$ .

On pourra alors adapter le procédé d'émission à cette variante.

## 1.7. Etalement périodique

Le traitement est ici identique à celui réalisé au chapitre 1.5 ou **1.6**, à l'exception que la matrice génératrice est ici appliquée de façon périodique dans le temps, et s'exprime :

$$\forall n, \quad \mathbf{W}_n = \mathbf{W}$$

## 1.8. Entrelacement chip

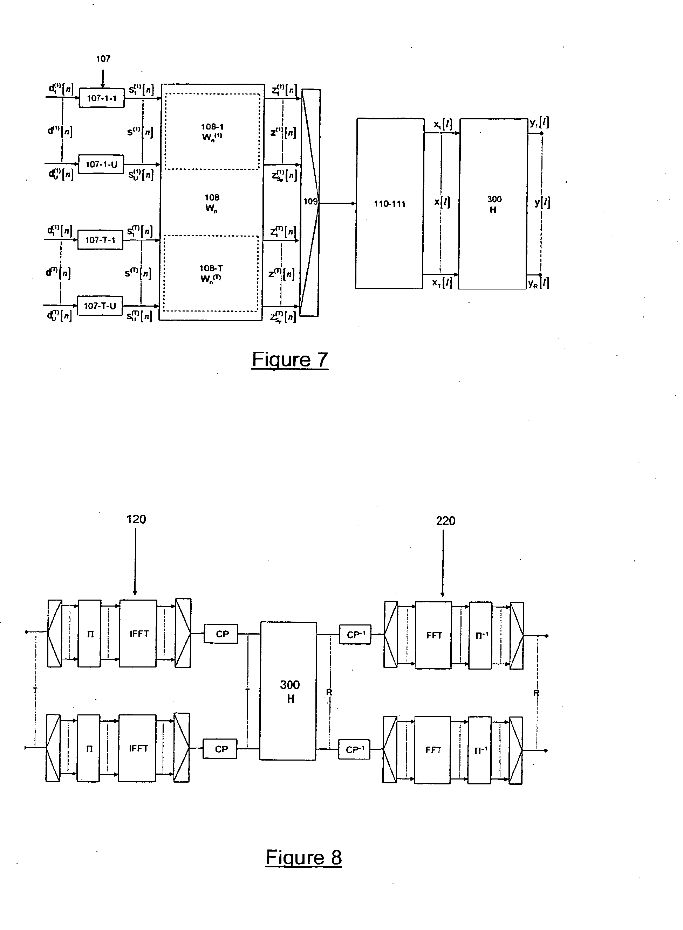

En référence aux figures 4 et 7, on suppose ici un codage linéaire interne (ou étalement) quelconque correspondant à l'une des stratégies décrites dans les chapitres **1.5** à **1.7** , mais qui est ici couplé à un entrelacement chip 108. Apres étalement par chip 108, les vecteurs de chips $\mathbf{z}[n]$ $n = 0,..., L$ -1 sont multiplexés en 109 en un flux de chips unique. Le flux de chips attaque alors un entrelaceur 110, dont la sortie est démultiplexée en 111 en T flux de chips distincts), un par antenne d'émission. Cette opération a pour effet de transformer la matrice de chips $\mathbf{Z}$ de dimension $N \times L$ :

$$\mathbf{Z} = \begin{bmatrix} \mathbf{z}[0] & \mathbf{z}[1] & \cdots & \mathbf{z}[L-1] \end{bmatrix} \in \mathbb{C}^{N \times L}$$

en une matrice de chips **X** de dimension $T \times LS_F$ :

$$\mathbf{X} = \begin{bmatrix} \mathbf{x}[0] & \mathbf{x}[1] & \cdots & \mathbf{x}[LS_F - 1] \end{bmatrix} \in \mathbb{C}^{T \times LS_F}$$

dont les colonnes **x** $[l]$ $l = 0,...,$ $LS_F$ -1 constituent les entrées du canal MIMO :

$$\mathbf{x}[l] = \begin{bmatrix} x_1[l] & x_2[l] & \cdots & x_T[l] \end{bmatrix}^{\mathsf{T}} \in \mathbb{C}^T$$

### 1.9. Efficacité spectrale

Le procédé d'émission s'inscrit naturellement dans la classe générale des codes espace-temps. L'efficacité spectrale du système (en bits par utilisation du canal), sous l'hypothèse d'un filtre de Nyquist idéal à bande limitée, est égale à :

$$\eta = T \times \rho_O \times q \times \alpha$$

En pratique, le filtre de mise en forme à l'émission présente un facteur $\varepsilon$ de débordement non nul (roll-off). En réception, on applique un filtre adapté à ce filtre d'émission pour toutes les antennes de réception. Il est supposé que les fonctions d'estimation de canal et de synchronisation de rythme et de porteuse sont réalisées de telle sorte que les coefficients de la réponse impulsionnelle du canal soient espacés régulièrement d'une valeur égale au temps chip (canal équivalent en bande de base discret au temps chip). Cette hypothèse est légitime, le théorème d'échantillonnage de Shannon imposant un échantillonnage au rythme $(1 + \varepsilon) / T_c$ qui peut être approché par $1/T_c$ lorsque $\varepsilon$ est petit. On pourra généraliser de façon directe des expressions qui suivent à un échantillonnage égal à un multiple de $1/T_c$ .

### 2. Modèle de canal

La transmission s'effectue sur un canal B-blocs à entrées et sorties multiples (MIMO) sélectif en fréquence :

$$\mathbf{H} \triangleq \left\{ \mathbf{H}^{(1)}, \mathbf{H}^{(2)}, \ldots, \mathbf{H}^{(B)} \right\}$$

Le canal $\mathbf{H}^{(b)}$ est supposé constant sur $L_X$ chips avec la convention :

$$L \times S_F = B \times L_X \quad B \in \mathbb{Z}$$

La matrice de chips **X** peut être segmentée en B matrices de chips distinctes $\mathbf{X}^{(1)},...,\mathbf{X}^{(B)}$, de dimension $T \times L_X$ (complétées à droite et à gauche par des zéros physiques ou temps de garde si besoin est), chaque matrice $\mathbf{X}^{(b)}$ voyant le canal $\mathbf{H}^{(b)}$.
Les cas extrêmes du modèle B-blocs sont les suivants :

$B = 1$ et $L_x = LS_F$ modèle quasi-statique
$B = LS_F$ et $L_X = 1$ modèle ergodique (chip)

Une renumérotation des chips est appliquée à l'intérieur de chaque bloc.
Pour tout indice de bloc b, le modèle de canal équivalent en bande de base à temps discret (rythme chip) permet d'écrire le vecteur reçu $\mathbf{y}^{(b)}\left[l\right] \in \mathbb{C}^R$ à l'instant chip 1 sous la forme :

$$\mathbf{y}^{(b)}\left[l\right] = \sum_{p=0}^{P-1} \mathbf{H}_p^{(b)}\, \mathbf{x}^{(b)}\left[l - p\right] + \mathbf{v}^{(b)}\left[l\right]$$

où P désigne la longueur de contrainte du canal (en chips), où $\mathbf{x}^{(b)}\left[l\right] \in \mathbb{C}^T$ désigne le vecteur complexe de T chips émis à l'instant chip 1, où $\mathbf{H}_p^{(b)} \in \mathbb{C}^{R \times T}$ est le coefficient matriciel indicé p de la réponse impulsionnelle du canal MIMO bloc indicé b et où $\mathbf{v}^{(b)}\left[l\right] \in \mathbb{C}^R$ est le vecteur complexe de bruit additif. Les vecteurs complexes de bruit additif $v^{(b)}$ [$l$] sont supposés indépendants et identiquement distribués selon une loi gaussienne R-dimensionnelle à symétrie circulaire de moyenne nulle et de matrice de covariance $\sigma^2\mathbf{I}$. Les P coefficients de la réponse impulsionnelle sont modélisés par des matrices complexes de dimension R×T, dont les entrées sont gaussiennes indépendantes identiquement distribuées, de moyenne nulle et de matrice de covariance satisfaisant la contrainte globale de normalisation en puissance :

$$E\left[ \operatorname{diag}\left\{ \sum_{p=0}^{P-1} \mathbf{H}_p^{(b)}\mathbf{H}_p^{(b)\dagger} \right\} \right] = T\mathbf{I}$$

dans le cas d'un système à puissance également répartie entre les différentes antennes d'émission. Sous ces hypothèses, les valeurs propres des matrices de corrélation des différents coefficients du canal MIMO suivent une distribution de Wishart. On souligne qu'une égale répartition de la puissance sur les antennes d'émission est une politique d'allocation de puissance légitime dans le cas d'une absence de connaissance du canal à l'émetteur (pas de CSI).

### 3. Transmission monoporteuse sur canal MIMO à trajets multiples (HSDPA)

On suppose ici que le débit est très élevé et que la fréquence Doppler du canal est faible, de telle sorte que $L_x \gg S_F$. Pour le mode HSDPA de la norme UMTS, le canal est quasi-statique, c'est à dire lorsque B=1 .

### 4. Transmission multiporteuse sur canal MIMO à trajets multiples (MC-CDMA)

Le codage interne linéaire 108 est ici spatio-fréquentiel ou fréquentiel. En référence à la figure 8, il est bien connu de l'homme de l'art que l'introduction en 120 d'une IFFT en émission et en 220 d'une FFT en réception (aux entrelacements près) rend un canal équivalent non sélectif en fréquence (canal modélisé par une matrice circulante grâce à l'emploi de préfixes cycliques, puis rendu diagonal dans la base de Fourier). Ainsi chaque porteuse voit un canal équivalent MIMO plat. Sous le formalisme précédemment présenté, le canal après FFT peut être vu comme un canal non sélectif (P = 1, M = 0) et B-blocs.

L'émission selon l'invention concerne non seulement un procédé permettant sa mise en oeuvre, mais aussi le système apte à l'exécuter.

### Revendications

1.    Procédé d'émission pour utilisateurs multiples désirant transmettre des données numériques sur un canal sélectif en fréquence avec plusieurs antennes en émission et plusieurs antennes en réception, **caractérisé en ce qu'**il met en oeuvre sur des données codées et entrelacées ($d[n]$):

- un démultiplexage (105) en K voies, où K est strictement supérieur au nombre T d'antennes d'émission, et une modulation (107) des données ainsi démultiplexées ;
- un codage interne linéaire (108) défini par une matrice génératrice ($\mathbf{W},\mathbf{W}_n$) de dimensions N×K où N est strictement supérieur à T, ce codage interne étant appliqué aux vecteurs de dimension K des données modulées.

**2.** Procédé selon la revendication 1, **caractérisé en ce que** le rendement K/N du codage interne linéaire est strictement supérieur à 1.

**3.** Procédé selon l'une des revendications précédentes, **caractérisé en ce que** ladite matrice génératrice ($\mathbf{W}$,$\mathbf{W}_n$) est construite à partir de N codes d'étalement orthogonaux de longueur N, assurant un facteur d'étalement égal à N.

**4.** Procédé selon la revendication 3, **caractérisé en ce que** les codes d'étalement sont ré-utilisés plusieurs fois dans la matrice génératrice ($\mathbf{W}$,$\mathbf{W}_n$) pour y former plusieurs groupes de codes d'étalement, de sorte que les codes d'étalement de chaque groupe de codes d'étalement soient orthogonaux entre eux.

**5.** Procédé selon la revendication 4, **caractérisé en ce que** ladite matrice génératrice ($\mathbf{W}_n$,$\mathbf{W}$) est en outre construite à partir de plusieurs codes d'embrouillage ($\Sigma$) superposés aux codes d'étalement, de sorte qu'à chaque groupe de codes d'étalement est attribué un code d'embrouillage propre.

**6.** Procédé selon la revendication 1 ou 2, **caractérisé en ce que** le codage linéaire interne est mis en oeuvre indépendamment sur chacune des T antennes d'émissions et s'applique pour l'antenne référencée *t* sur un vecteur de données modulées de dimension $U_t$ strictement supérieur à 1, avec $K = \sum_{t=1}^{T} U_t$, ladite matrice génératrice ($\mathbf{W}$, $\mathbf{W}_n$) étant alors diagonale par blocs, le nombre de blocs étant égal au nombre T d'antennes d'émission, le bloc associé à l'antenne t étant de dimension $(N/T) \times U_t$.

**7.** Procédé selon la revendication précédente, **caractérisé en ce que** la dimension $U_t$ du bloc associé à l'antenne t est la même que celle de chacun des autres blocs de la matrice génératrice ($\mathbf{W}$,$\mathbf{W}_n$), $U_t$ se notant alors U et chaque bloc étant de dimension $(N/T) \times U$.

**8.** Procédé selon la revendication 6 ou 7, **caractérisé en ce que** chacun desdits blocs de la matrice génératrice est construit à partir de N/T codes d'étalement orthogonaux de longueur N/T, assurant un facteur d'étalement N/T.

**9.** Procédé selon l'une des revendications 6 à 8, **caractérisé en ce que** les blocs sont construits à partir des même codes d'étalement orthogonaux.

**10.** Procédé selon l'une des revendications 6 à 9, **caractérisé en ce que** la matrice génératrice est en outre construite à partir de plusieurs codes d'embrouillage ($\Sigma$) superposés aux codes d'étalement, de sorte que chacun desdits blocs de la matrice d'étalement se voit attribué un code d'embrouillage propre.

**11.** Procédé selon l'une des revendications 6 à 10, **caractérisé en ce que** K est strictement supérieur à N/T.

**12.** Procédé selon l'une des revendications 6 à 9, **caractérisé en ce que** $U_t$ est strictement supérieur à N/T quelque soit t.

**13.** Procédé selon la revendication 12, **caractérisé en ce que** chacun desdits blocs est construit à partir de plusieurs groupes de codes d'étalement, chaque groupe étant construit à partir de N/T codes orthogonaux de longueur N/T, assurant un facteur d'étalement N/T, les N/T codes d'étalement étant ré-utilisés plusieurs fois par bloc pour former lesdits plusieurs groupes de codes d'étalement par bloc, de sorte que les codes d'étalement de chaque groupe de codes d'étalement soient orthogonaux entre eux.

**14.** Procédé selon la revendication 13, **caractérisé en ce que** la matrice génératrice ($\mathbf{W}$,$\mathbf{W}_n$) est en outre construite à partir de codes d'embrouillage ($\Sigma$) superposés aux codes d'étalement, de sorte qu'à chaque groupe de codes d'étalement soit attribué un code d'embrouillage propre, lesdits codes d'embrouillage étant distincts les uns des autres par groupe et par bloc.

**15.** Procédé d'émission selon l'une des revendications précédentes, **caractérisé en ce qu'**il comprend en outre, après le codage interne linéaire (108) :

    (a) un multiplexage (109) ;
    (b) un entrelacement (110) des données ainsi multiplexées ;

(c) un démultiplexage (111) pour répartir les données ainsi entrelacées sur les T antennes d'émission.

**16.** Procédé d'émission selon l'une des revendications 1 à 14, **caractérisé en ce qu'**il comprend en outre, après le codage interne linéaire (108), un multiplexage (111) pour repartir les données sur les T antennes d'émission.

**17.** Procédé d'émission selon l'une des revendications précédentes, **caractérisé en ce que** le codage interne linéaire (108) est appliqué aux données modulées de façon périodique dans le temps.

**18.** Procédé selon l'une des revendications 1 à 16, **caractérisé en ce que** le codage interne linéaire (108) est appliqué aux données modulées de façon apériodique dans le temps.

**19.** Procédé selon l'une des revendications précédentes, **caractérisé en ce qu'**il comprend en outre, avant ledit démultiplexage (105), au moins un codage externe (102) des données numériques provenant d'un ou de plusieurs utilisateurs et un entrelacement (104) pour former lesdites données codées et entrelacées ($\mathbf{d}[n]$).

**20.** Procédé d'émission selon l'une des revendications précédentes, **caractérisé en ce que** le codage interne linéaire est réalisé en fréquences, et **en ce que** la transmission est de type multiporteuse.

**21.** Procédé d'émission selon l'une des revendications 1 à 19, **caractérisé en ce que** le codage interne linéaire est réalisé en temps, et **en ce que** la transmission est de type monoporteuse.

**22.** Système d'émission pour utilisateurs multiples désirant transmettre des données numériques sur un canal sélectif en fréquence avec plusieurs antennes en émission et plusieurs antennes en réception, **caractérisé en ce qu'**il comprend :

   - un démultiplexeur (105) de données codées et entrelacées ($\mathbf{d}[n]$) sur K voies, où K est strictement supérieur au nombre T d'antennes d'émission ;
   - un modulateur (107) des données de sortie du démultiplexeur ;
   - un encodeur interne linéaire (108) apte à coder au moyen d'une matrice génératrice ($\mathbf{W},\mathbf{W}_n$) de dimensions $N \times K$ où N est strictement supérieur à T, ce codage interne étant appliqué à des vecteurs de dimension K des données en sortie du modulateur ;
   - T antennes d'émission.

**23.** Système selon la revendication 22, **caractérisé en ce qu'**il comprend en outre :

   - un multiplexeur (109) des données codées par ledit encodeur interne (108);
   - un entrelaceur (110) des données ainsi multiplexées ;
   - un démultiplexeur (111) pour répartir les données ainsi entrelacées sur les T antennes d'émission.

**24.** Système selon la revendication 22, **caractérisé en ce qu'**il comprend en outre un multiplexeur (111) des données codées par ledit encodeur interne (108) pour répartir les données ainsi entrelacées sur les T antennes d'émission.

**25.** Système selon l'une des revendications 22 à 24, **caractérisé en ce qu'**il comprend en outre, en amont du démultiplexeur (105) :

   - au moins un encodeur (102) des données numériques provenant d'un ou plusieurs utilisateurs ;
   - un entrelaceur au niveau binaire (104).

**Claims**

**1.** Sending method for multiple users desiring to transmit digital data on a frequency-selective channel with several send antennas and several receive antennas, **characterized in that** it implements on coded and interleaved data ($\mathbf{d}[n]$):

   - a K-pathway demultiplexing (105), where K is strictly greater than the number T of send antennas, and a modulation (107) of the data thus demultiplexed;
   - a linear inner coding (108) defined by a generating matrix ($\mathbf{W}, \mathbf{W}_n$) of dimensions NxK where N is strictly greater than T, this inner coding being applied to the vectors of dimension K of the modulated data.

**2.** Method according to Claim 1, **characterized in that** the efficiency K/N of the linear inner coding is strictly greater than 1.

**3.** Method according to one of the preceding claims, **characterized in that** the said generating matrix $(W, W_n)$ is constructed on the basis of N orthogonal spreading codes of length N, ensuring a spreading factor equal to N.

**4.** Method according to Claim 3, **characterized in that** the spreading codes are reused several times in the generating matrix $(\mathbf{W}, \mathbf{W}_n)$ to form therein several groups of spreading codes, so that the spreading codes of each group of spreading codes are mutually orthogonal.

**5.** Method according to Claim 4, **characterized in that** the said generating matrix $(\mathbf{W}_n, \mathbf{W})$ is furthermore constructed on the basis of several scrambling codes $(\Sigma)$ overlayed on the spreading codes, so that to each group of spreading codes is allocated an inherent scrambling code.

**6.** Method according to Claim 1 or 2, **characterized in that** the inner linear coding is implemented independently on each of the T send antennas and applies for the antenna referenced t on a modulated data vector of dimension $U_t$ strictly greater than 1, with $K = \sum_{t=1}^{T} U_t$, the said generating matrix $(\mathbf{W}, \mathbf{W}_n)$ then being block diagonal, the number of blocks being equal to the number T of send antennas, the block associated with antenna t being of dimension $(N/T)xU_t$.

**7.** Method according to the preceding claim, **characterized in that** the dimension $U_t$ of the block associated with antenna t is the same as that of each of the other blocks of the generating matrix $(\mathbf{W}, \mathbf{W}_n)$, $U_t$ then being denoted U and each block being of dimension (N/T)xU.

**8.** Method according to Claim 6 or 7, **characterized in that** each of the said blocks of the generating matrix is constructed on the basis of N/T orthogonal spreading codes of length N/T, ensuring a spreading factor N/T.

**9.** Method according to one of Claims 6 to 8, **characterized in that** the blocks are constructed on the basis of the same orthogonal spreading codes.

**10.** Method according to one of Claims 6 to 9, **characterized in that** the generating matrix is furthermore constructed on the basis of several scrambling codes $(\Sigma)$ overlayed on the spreading codes, so that each of the said blocks of the spreading matrix is allocated an inherent scrambling code.

**11.** Method according to one of Claims 6 to 10, **characterized in that** K is strictly greater than N/T.

**12.** Method according to one of Claims 6 to 9, **characterized in that** $U_t$ is strictly greater than N/T for any t.

**13.** Method according to Claim 12, **characterized in that** each of the said blocks is constructed on the basis of several groups of spreading codes, each group being constructed on the basis of N/T orthogonal codes of length N/T, ensuring a spreading factor N/T, the N/T spreading codes being reused several times per block to form the said several groups of block spreading codes, so that the spreading codes of each group of spreading codes are mutually orthogonal.

**14.** Method according to Claim 13, **characterized in that** the generating matrix $(\mathbf{W}, \mathbf{W}_n)$ is furthermore constructed on the basis of scrambling codes $(\Sigma)$ overlayed on the spreading codes, so that to each group of spreading codes is allocated an inherent scrambling code, the said scrambling codes being distinct from one another group-wise and block-wise.

**15.** Sending method according to one of the preceding claims, **characterized in that** it furthermore comprises, after the linear inner coding (108):

(a) a multiplexing (109);

(b) an interleaving (110) of the data thus multiplexed;

(c) a demultiplexing (111) to distribute the data thus interleaved over the T send antennas.

**16.** Sending method according to one of Claims 1 to 14, **characterized in that** it furthermore comprises, after the linear inner coding (108), a multiplexing (111) to distribute the data over the T send antennas.

**17.** Sending method according to one of the preceding claims, **characterized in that** the linear inner coding (108) is applied to the data modulated in a periodic manner over time.

**18.** Method according to one of Claims 1 to 16, **characterized in that** the linear inner coding (108) is applied to the data modulated in an aperiodic manner over time.

**19.** Method according to one of the preceding claims, **characterized in that** it furthermore comprises, before the said demultiplexing (105), at least one outer coding (102) of the digital data originating from one or more users and an interleaving (104) to form the said coded and interleaved data ($\mathbf{d}$[n]).

**20.** Sending method according to one of the preceding claims, **characterized in that** the linear inner coding is carried out frequency-wise, and **in that** the transmission is of multicarrier type.

**21.** Sending method according to one of Claims 1 to 19, **characterized in that** the linear inner coding is carried out time-wise, and **in that** the transmission is of monocarrier type.

**22.** Sending system for multiple users desiring to transmit digital data on a frequency-selective channel with several send antennas and several receive antennas, **characterized in that** it comprises:

- a demultiplexer (105) of coded and interleaved data ($\mathbf{d}$[n]) on K pathways, where K is strictly greater than the number T of send antennas;
- a modulator (107) of the output data of the demultiplexer;
- a linear inner encoder (108) able to code by means of a generating matrix ($\mathbf{W}$,$\mathbf{W}_n$) of dimensions NxK where N is strictly greater than T, this inner coding being applied to vectors of dimension K of the data output by the modulator;
- T send antennas.

**23.** System according to Claim 22, **characterized in that** it furthermore comprises:

- a multiplexer (109) of the data coded by the said inner encoder (108);
- an interleaver (110) of the data thus multiplexed;
- a demultiplexer (111) for distributing the data thus interleaved over the T send antennas.

**24.** System according to Claim 22, **characterized in that** it furthermore comprises a multiplexer (111) of the data coded by the said inner encoder (108) for distributing the data thus interleaved over the T send antennas.

**25.** System according to one of Claims 22 to 24, **characterized in that** it furthermore comprises, upstream of the demultiplexer (105):

- at least one encoder (102) of the digital data originating from one or more users;
- an interleaver at the binary level (104).

**Patentansprüche**

**1.** Sendeverfahren für mehrere Benutzer, die digitale Daten auf einem in Frequenz selektiven Kanal mit mehreren Sendeantennen und mehreren Empfangsantennen senden wollen, **dadurch gekennzeichnet, dass** es auf codierten und verschachtelten Daten (d[$n$]) Folgendes umsetzt:

- ein Demultiplexen (105) in K Pfade, wobei K strikt größer ist als die Anzahl T von Sendeantennen, und eine Modulation (107) der so gedemultiplexten Daten,
- ein lineares internes Codieren (108), definiert durch eine Erzeugungsmatrix (W, W$_n$) mit den Maßen NxK, wobei N strikt größer ist als T, wobei dieses interne Codieren an die Vektoren mit dem Maß K der modulierten Daten angewandt wird.

2. Verfahren nach Anspruch 1, **dadurch gekennzeichnet, dass** die Leistung K/N des internen linearen Codierens strikt größer ist als 1.

3. Verfahren nach einem der vorhergehenden Ansprüche, **dadurch gekennzeichnet, dass** die Erzeugungsmatrix $(W, W_n)$ ausgehend von N orthogonalen Spreizungscodes mit Länge N gebaut ist, die einen Spreizungsfaktor gleich N sicherstellen.

4. Verfahren nach Anspruch 3, **dadurch gekennzeichnet, dass** die Spreizungscodes mehrmals in der Erzeugungsmatrix $(W, W_n)$ wiederverwendet werden, um dort mehrere Gruppen von Spreizungscodes zu bilden, so dass die Spreizungscodes jeder Spreizungscodegruppe untereinander orthogonal sind.

5. Verfahren nach Anspruch 4, **dadurch gekennzeichnet, dass** die Erzeugungsmatrix $(W, W_n)$ ferner ausgehend von mehreren Verwürfelungscodes $(\Sigma)$ gebaut ist, die den Spreizungscodes überlagert sind, so dass jeder Spreizungscodegruppe ein eigener Verwürfelungscode zugewiesen ist.

6. Verfahren nach Anspruch 1 oder 2, **dadurch gekennzeichnet, dass** das interne lineare Codieren unabhängig auf jeder der T Sendeantennen umgesetzt wird und für die Antenne gilt, die mit t auf einem Vektor modulierter Daten

mit Maß $U_t$ strikt größer als 1 referenziert ist, wobei $K = \sum_{t=1}^{T} U_t$, wobei die Erzeugungsmatrix $(W, W_n)$ dann

in Blöcken diagonal ist, wobei die Anzahl der Blöcke gleich der Anzahl T Sendeantennen ist, wobei der mit der Antenne t verbundene Block das Maß $(N/T)xU_t$ hat.

7. Verfahren nach dem vorhergehenden Anspruch, **dadurch gekennzeichnet, dass** das Maß $U_t$ des mit der Antenne t verbundenen Blocks das gleiche ist wie das jedes der anderen Blöcke der Erzeugungsmatrix $(W, W_n)$, wobei $U_t$ dann U geschrieben wird und jeder Block das Maß (N/T)xU hat.

8. Verfahren nach Anspruch 6 oder 7, **dadurch gekennzeichnet, dass** jeder der Blöcke der Erzeugungsmatrix ausgehend von N/T orthogonalen Spreizungscodes mit der Länge N/T gebaut ist, die einen Spreizungsfaktor N/T sicherstellt.

9. Verfahren nach einem der Ansprüche 6 bis 8, **dadurch gekennzeichnet, dass** die Blöcke ausgehend von den gleichen orthogonalen Spreizungscodes gebaut sind.

10. Verfahren nach einem der Ansprüche 6 bis 9, **dadurch gekennzeichnet, dass** die Erzeugungsmatrix ferner ausgehend von mehreren Verwürfelungscodes $(\Sigma)$ gebaut ist, die den Spreizungscodes überlagert sind, so dass jedem der Blöcke der Spreizmatrix ein eigener Verwürfelungscode zugewiesen ist.

11. Verfahren nach einem der Ansprüche 6 bis 10, **dadurch gekennzeichnet, dass** K strikt größer ist als N/T.

12. Verfahren nach einem der Ansprüche 6 bis 9, **dadurch gekennzeichnet, dass** $U_t$ strikt größer ist als N/T, ungeachtet dessen, wie groß t ist.

13. Verfahren nach Anspruch 12, **dadurch gekennzeichnet, dass** jeder der Blöcke ausgehend von mehreren Spreizungscodegruppen gebaut ist, wobei jede Gruppe ausgehend von N/T orthogonalen Codes mit der Länge N/T gebaut ist, was einen Spreizungsfaktor N/T gewährleistet, wobei die N/T Spreizungscodes mehrere Male pro Block wiederverwendet werden, um die mehreren Spreizungscodegruppen pro Block zu bilden, so dass die Spreizungscodes jeder Gruppe von Spreizungscodes untereinander orthogonal sind.

14. Verfahren nach Anspruch 13, **dadurch gekennzeichnet, dass** die Erzeugungsmatrix $(W, W_n)$ ferner ausgehend von Verwürfelungscodes $(\Sigma)$ gebaut ist, die den Spreizungscodes überlagert sind, so dass jeder Gruppe von Spreizungscodes ein eigener Verwürfelungscode zugewiesen ist, wobei die Verwürfelungscodes voneinander pro Gruppe und pro Block unterschiedlich sind.

**15.** Sendeverfahren nach einem der vorhergehenden Ansprüche, **dadurch gekennzeichnet, dass** es ferner nach dem linearen internen Codieren (108) Folgendes aufweist:

(a) ein Multiplexen (109),
(b) ein Verschachteln (110) der so gemultiplexten Daten,
(c) ein Demultiplexen (111), um die so verschachtelten Daten auf die T Sendeantennen zu verteilen.

**16.** Sendeverfahren nach einem der Ansprüche 1 bis 14, **dadurch gekennzeichnet, dass** es ferner nach dem linearen internen Codieren (108) ein Multiplexen (111) zum Verteilen der Daten auf die T Sendeantennen aufweist.

**17.** Sendeverfahren nach einem der vorhergehenden Ansprüche, **dadurch gekennzeichnet, dass** das lineare interne Codieren (108) an die modulierten Daten zeitlich periodisch angewandt wird.

**18.** Verfahren nach einem der Ansprüche 1 bis 16, **dadurch gekennzeichnet, dass** das lineare interne Codieren (108) an die modulierten Daten zeitlich aperiodisch angewandt wird.

**19.** Verfahren nach einem der vorhergehenden Ansprüche, **dadurch gekennzeichnet, dass** es ferner vor dem Demultiplexen (105) mindestens ein externes Codieren (102) der digitalen Daten aufweist, die von einem oder mehreren Benutzern stammen, sowie ein Verschachteln (104), um die codierten und verschachtelten Daten (d[$n$]) zu bilden.

**20.** Sendeverfahren nach einem der vorhergehenden Ansprüche, **dadurch gekennzeichnet, dass** das lineare interne Codieren in Frequenzen ausgeführt wird, und **dadurch**, dass das Übertragen des Multiträgerwellentyps ist.

**21.** Sendeverfahren nach einem der Ansprüche 1 bis 19, **dadurch gekennzeichnet, dass** das lineare interne Codieren zeitlich ausgeführt wird, und dass das Übertragen des Einzelträgerwellentyps ist.

**22.** Sendesystem für mehrere Benutzer, die digitale Daten auf einem in Frequenz selektiven Kanal mit mehreren Sendeantennen und mehreren Empfangsantennen senden wollen, **dadurch gekennzeichnet, dass** es Folgendes aufweist:

- einen Demultiplexer (105) für codierte und verschachtelte Daten (d[$n$]) auf K Pfaden, wobei K strikt größer ist als die Anzahl T von Sendeantennen,
- einen Modulator (107) der Ausgangsdaten des Demultiplexers,
- einen linearen internen Codierer (108), der mittels einer Erzeugungsmatrix (W, W$_n$) mit den Maßen NxK, wobei N strikt größer ist als T, codieren kann, wobei dieses interne Codieren an Vektoren mit dem Maß K der Daten am Ausgang des Modulators angewandt wird,
- T Sendeantennen.

**23.** System nach Anspruch 22, **dadurch gekennzeichnet, dass** es ferner Folgendes aufweist:

- einen Multiplexer (109) für Daten, die von dem internen Codierer (108) codiert sind,
- einen Verschachteler (110) der so gemultiplexten Daten,
- einen Demultiplexer (111) zum Verteilen der so verschachtelten Daten auf die T Sendeantennen.

**24.** System nach Anspruch 22, **dadurch gekennzeichnet, dass** es ferner einen Multiplexer (110) der von dem internen Codierer (108) codierten Daten aufweist, um die so verschachtelten Daten auf die T Sendeantennen zu verteilen.

**25.** System nach einem der Ansprüche 22 bis 24, **dadurch gekennzeichnet, dass** es ferner stromaufwärts des Demultiplexers (105) Folgendes aufweist:

- mindestens einen Codierer (102) der digitalen Daten, die von einem oder mehreren Benutzern stammen,
- einen Verschachteler auf binärer Ebene (104).

Figure 1

Figure 2

Figure 3

Figure 4

Figure 5

Figure 6

Figure 7

Figure 8